# EUROPEAN PATENT SPECIFICATION

(11) **EP 1 590 393 B1**
(45) Date of publication and mention of the grant of the patent: **24.05.2006**
(21) Application number: 04701948.4
(22) Date of filing: 14.01.2004
(51) Int. Cl.: C08G 63/80, C08G 63/78

(54) **A METHOD FOR THE SOLID STATE POLYMERIZATION OF POLYETHYLENE TEREPHTHALATE**
VERFAHREN ZUR FESTKÖRPERPOLYMERISATION VON POLYETHYLENTEREPHTHALAT
PROCEDE PERMETTANT DE POLYMERISER UN POLYETHYLENE TEREPHTHALATE A L'ETAT SOLIDE

(30) Priority: 15.01.2003 IT MI20030048
(43) Date of publication of application: 02.11.2005
(73) Proprietor: VOMM CHEMIPHARMA S.r.l., 20121 Milano (IT)
(72) Inventor: CEREA, Giuseppina, 20089 Trezzano sul Naviglio (Milano) (IT)
(74) Representative: Ferreccio, Rinaldo
(86) International application number: PCT/EP2004/000203
(87) International publication number: WO 2004/063248

(56) References cited:
- EP-A- 0 538 653
- EP-A- 0 856 537
- WO-A-20/04018541
- GB-A- 1 047 043
- US-A- 3 767 601
- US-A- 4 064 112
- US-A- 4 092 458
- US-A- 4 226 973
- US-A- 4 271 287
- US-A- 4 361 538
- US-A- 4 370 302
- US-A- 5 711 089

## Description

### Field of Application

The present invention relates, in general, to a method for the solid state polymerization of polyethylene terephthalate (PET), in particular of PET coming from separately collected solid wastes, such as for example empty bottles of mineral water and drinks.

In particular, the invention relates to a method for obtaining PET with high intrinsic viscosity and thus suitable for being used in subsequent extrusion and moulding processes, starting from PET having a highly variable and generally low intrinsic viscosity, such as that of bottles coming from separately collected fractions.

At present, empty bottles and other products made from PET which are recovered with the separately collected solid wastes are subjected to washing, chopping and grinding operations, obtaining a more or less fine flake or powder product, which is then added, in low percentage, to virgin PET in the starting mixtures for manufacturing bottles through conventional extrusion methods. By operating in this way, the mechanical performances of the final vessels are however poorer than those of the vessels obtained starting from only virgin PET.

It is also known that PET manufactured by reaction of terephthalate acid with ethylene glycol and subsequent polymerization has an insufficient degree of polymerization for use in the extrusion processes of bottles and similar vessels. The polymerization degree is evaluated by measuring the intrinsic viscosity, which is, for the PET discharged from the polymerization reactors, of around 0,60-0,63 dl/g.

In order to increase the intrinsic viscosity and thus the degree of polymerization of PET, according to the known technique, a solid state polymerization carried out in stoves under nitrogen at 220°C for several hours, according to the desired intrinsic viscosity value, is then performed.

A method for ennobling the PET of the empty bottles obtained from the separate collection of wastes, from now on called, for simplicity sake, "used PET" or "post consumer PET" is then known. According to this known method, the used PET, already washed and ground, characterized by an intrinsic viscosity value of about 0,60-0,80 dl/g, is first subjected to a pelletization. The pellets thus obtained are then subjected to a solid state polymerization, which implies the heating of the pellets in stoves at temperatures higher than 200°C for 12-20 hours in an inert atmosphere.

It is clear, however, that this method is rather expensive in terms of consumption of energy and time and it further implies a discontinuous operation. The drawbacks of this method have been partially overcome by the method described in the application EP 0856537, which directly subjects the flaked or powdered used PET to the solid state polymerization, without a previous pelletization step.

According to this method, which however comprises a step of preheating the flaked or powdered PET and two steps of solid state polymerization, a PET is obtained with an average intrinsic viscosity of at least 0,85 dl/g starting from used PET with an intrinsic viscosity of 0,60-0,8 dl/g in around 3,5 hours.

The method according to EP 0 856 537, although faster than the known method, suffers however from the drawback of providing a discontinuous operation, because it always implies the use of stoves or similar apparatuses.

### Summary of the invention

The problem underlying the present invention is that of providing a method for the solid state polymerization of PET, in particular of used PET, which can be carried out faster than the known methods and which allows a continuous operation.

This problem is solved, according to the invention, by a method comprising the steps of:
- subjecting finely divided PET material, having an intrinsic viscosity comprised between 0,60 and 0,80 dl/g to heating in an inert atmosphere while it flows in the form of a thin, turbulent, dynamic layer in contact with a wall heated to at least 200°C, obtaining a PET material with an average intrinsic viscosity higher or equal to 0,85 dl/g.

PET material coming from separately collected waste, previously ground" can be advantageously used as the starting PET material.

Conveniently, the method according to the invention can be carried out with the aid of an apparatus called turbo-heater, comprising a cylindrical tubular body, equipped with a heating jacket, closed at the opposite ends by end plates, equipped with inlet and outlet openings and having a coaxial bladed rotor rotatably supported thereinside. In this case, the method according to the invention comprises the steps of:
feeding a continuous stream of a finely divided PET material, with an intrinsic viscosity comprised between 0,60 and 0,80 dl/g, into the above turbo-heater, whose wall temperature is of at least 200°,
feeding in cocurrent into the turbo-heater a continuous stream of an inert gas,
subjecting the stream of PET material to the mechanical action of the bladed rotor rotated at a speed of at least 200 revolutions per minute, with subsequent centrifugation of the above material against the heated wall, which determines a solid state polymerization of the above material, and the conveyance of the same towards the outlet opening,
continuously discharging a stream of a PET product having an average intrinsic viscosity of at least 0,85 dl/g.

Preferably, the inert gas fed into the turbo-heater is nitrogen, possibly heated.

The rotation speed of the bladed rotor is preferably comprised between 200 and 1500 rpm.

The flow rate of the stream of PET material entering into the turbo-heater is generally comprised between 150 and 400 kg/h and that of the inert gas stream between 200 and 400 Nm³/h.

The wall temperature is preferably maintained at around 240-260°C and the average residence time of the PET material in the turbo-heater is generally comprised between 30 seconds and 2 minutes.

The finely divided PET material used in the method according to the present invention can be virgin PET not yet subjected to solid state polymerization or it can be obtained by grinding PET material coming from the separately collected solid waste.

As it can be noted from the above, the main advantage offered by the method according to the invention with respect to those of the prior art is represented by considerably lower times (minutes instead of hours) and by the possibility of a continuous operation, with subsequent increase of the hourly throughput.

Moreover, by virtue of the use of the above described turbo-heater, the method according to the invention is characterized by an extremely moderate energy consumption.

Further advantages and features of the method according to the present invention will be clearer from the description of one embodiment thereof, given hereafter by way of illustrative and non-limiting example, with reference to the herewith attached drawing, which schematically shows an apparatus for the implementation of the present method.

### Detailed description

Making reference to this drawing, the apparatus used for the solid state polymerization of PET comprises a turbo-heater T.

The turbo-heater T (manufactured, e.g., by the firm VOMM Impianti e Processi of Rozzano (I-Milano)) essentially comprises a cylindrical tubular body 1 closed at the opposite ends by end plates 2, 3 and equipped with a coaxial heating jacket 4 through which a fluid, e.g. diathermic oil, is to flow.

The tubular body 1 has an inlet opening 5 for the flake or powder PET material and an outlet opening 6 for the product which has undergone the solid state polymerization treatment.

Inside the tubular body 1 a bladed rotor 7 is rotatably supported. The blades 8 of this rotor are helicoidally arranged and oriented so as to centrifuge and simultaneously advance towards the exit the product subjected to the treatment. A motor M rotates the rotor 7 at a speed comprised between 200 and 1500 rpm, preferably 400-600 rpm.

On account of contingent technical reasons, the turbo-heater can obviously have more than one inlet opening.

A stream of used, flaked or powdered PET material with an intrinsic viscosity comprised between 0,60 and 0,80 dl/g is continuously fed into the turbo-heater T through the inlet opening 5, simultaneously and in cocurrent with a nitrogen stream. The PET material is centrifuged by the rotor blades, as from its entrance into the turbo-heater, against the heated inner wall 9 and it is simultaneously conveyed towards the outlet opening 6 thanks to the helicoidal orientation of the above blades.

Thanks to the formation of a thin, dynamic, turbulent, tubular layer of PET material, wherein the particles of material absorb a great quantity of energy, both in the form of mechanical energy supplied by the action of the bladed rotor rotated at a high speed, both in the form of heat given by the heated inner wall of the turbo-heater T, the PET material undergoes, in a few seconds or minutes, a solid state polymerization . This polymerization results to be of the same entity as that achieved through the discontinuous methods of the known technique, with a clear difference in terms of reaction times.

After a residence time in the drier of about 30-120 seconds, a PET product having an intrinsic viscosity higher or equal to 0,85 and a temperature generally higher than 200°C is continuously discharged.

### EXAMPLE

By using the above schematically described apparatus and by following the method of the invention, a PET material coming from separately collected municipal solid wastes, previously ground, washed and dried and having an intrinsic viscosity of 0,60-0,65 dl/g, was continuously fed into the turbo-heater T, with a flow rate of 300 kg/h, simultaneously and in cocurrent with a nitrogen stream, with a flow rate of 600 Nm³/h.

The temperature of the wall 9 was maintained at around 250°C whereas the rotation speed of the bladed rotor 7 was maintained constant at 500 rpm.

After an average residence time in the turbo-heater T of 45 seconds, a stream of nitrogen and a stream of final powder product (T° = 200°C) provided with an average intrinsic viscosity of 0,90 dl/g were continuously discharged.

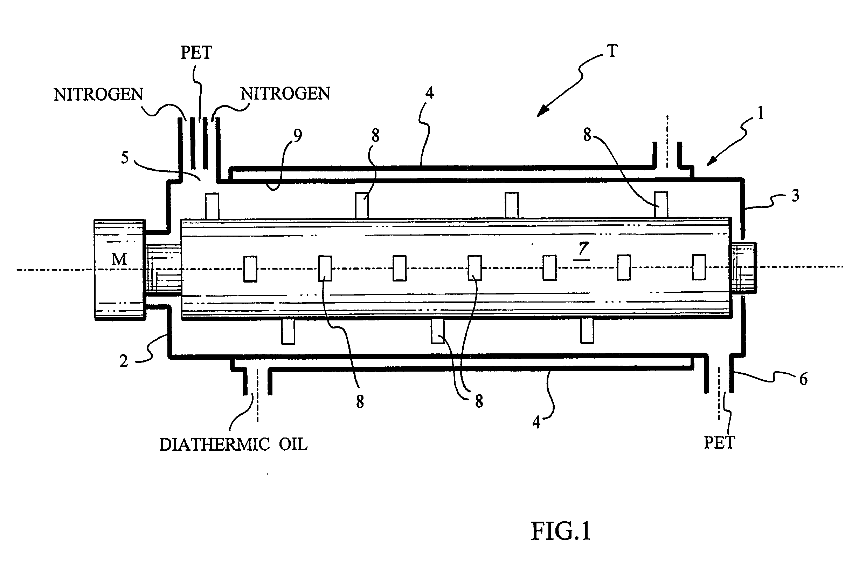

## Claims

1. A method for the solid state polymerization of PET, which comprises the steps of:
- providing a turbo-heater (T) comprising a cylindrical tubular body (1), closed at its opposite ends by end plates (2, 3), equipped with a heating jacket (4), with inlet and outlet openings (5, 6) and with a bladed rotor (7) rotatably supported thereinside.
- feeding a continuous stream of a finely divided PET material, with an intrinsic viscosity comprised between 0,60 and 0,80 dl/g, into said turbo-heater (T), whose inner wall (9) temperature is of at least 200°,
- feeding in cocurrent into said turbo-heater (T) a continuous stream of an inert gas,
- subjecting said stream of PET material to the mechanical action of said bladed rotor (7) rotated at a speed of at least 200 rpm, with a consequent centrifugation of the above material against said heated wall (9), which brings about a solid state polymerization of said material, and conveyance of the same towards said outlet opening,
- continuously discharging a stream of a PET product having an average intrinsic viscosity of at least 0,85 dl/g.

2. A method according to claim 1, wherein said inert gas is nitrogen.

3. A method according to claim 1 or 2, wherein said bladed rotor (7) rotates at a speed comprised between 200 and 1500 rpm.

4. A method according to any one of the preceding claims , wherein the flow rate of the stream of PET material entering into the turbo-heater (T) is comprised between 150 and 400 kg/h.

5. A method according to claim 4, wherein the flow rate of the inert gas stream is comprised between 200 and 400 Nm³/h.

6. A method according to any one of the preceding claims, wherein said wall temperature is of around 240-260°C.

7. A method according to any one of the preceding claims, wherein the average residence time of said PET material in the turbo-heater (T) is comprised between 30 seconds and 2 minutes.

8. A method according to any of the claims 1 to 7, wherein said finely divided PET material is obtained by grinding PET material coming from separately collected solid wastes.

## Patentansprüche

1. Verfahren zur Festphasenpolymerisation von PET, das die Schritte umfasst:
- Bereitstellen eines Turbo-Heizaggregates (T) umfassend einen zylindrischen rohrförmigen Körper (1), der an seinen gegenüberliegenden Enden durch Endplatten (2, 3) geschlossen ist, der mit einem Heizmantel (4), mit Einlass- und Auslassöffnungen (5, 6) und mit einem darin drehbar abgestützten Flügelrotor (7) ausgerüstet ist,
- Zuführen eines kontinuierlichen Stroms eines fein zerteilten PET-Materials mit einer intrinsischen Viskosität zwischen 0,60 und 0,80 dl/g in das Turbo-Heizaggregat (T), dessen Temperatur der inneren Wand (9) mindestens 200° C ist,
- Zuführen eines kontinuierlichen Stroms eines Inertgases im Gleichstrom in das Turbo-Heizaggregat (T),
- Unterwerfen des Stroms des PET-Materials einer mechanischen Einwirkung des Flügelrotors (7), der sich mindestens mit einer Geschwindigkeit von 200 Upm dreht, woraus Zentrifugieren des obigen Materials gegen die beheizte Wand (9) folgt, welches eine Festphasenpolymerisation dieses Materials bewirkt und eine Förderung desselben in Richtung auf die Auslassöffnung zu,
- kontinuierliches Abführen eines Stromes eines PET-Produktes mit einer durchschnittlichen intrinsischen Viskosität von mindestens 0,85 dl/g.

2. Verfahren nach Anspruch 1, worin das Inertgas Stickstoff ist.

3. Verfahren nach Anspruch 1 oder 2, worin der Flügelrotor (7) mit einer Geschwindigkeit zwischen 200 und 1500 Upm dreht.

4. Verfahren nach einem der vorhergehenden Ansprüche, worin der Durchsatz des in das Turbo-Heizaggregat (T) eintretenden Stroms von PET-Material zwischen 150 und 400 kg/h ist.

5. Verfahren nach Anspruch 4, worin der Durchsatz des Inertgasstromes zwischen 200 und 400 Nm³/h ist.

6. Verfahren nach einem der vorhergehenden Ansprüche, worin die Wandtemperatur ungefähr 240 bis 260° C ist.

7. Verfahren nach einem der vorhergehenden Ansprüche, worin die durchschnittliche Verweildauer des PET-Materials in dem Turbo-Heizaggregat (T) zwischen 30 Sekunden und 2 Minuten ist.

8. Verfahren nach einem der Ansprüche 1 bis 7, worin das fein zerteilte PET-Material durch Mahlen von PET-Material erhalten wird, der aus getrennt gesammelten Feststoffabfall stammt.

## Revendications

1. Procédé de polymérisation de PET à l'état solide, qui comprend les étapes consistant à :
- fournir un dispositif de chauffage à turbine (T) comprenant un corps tubulaire cylindrique (1), fermé au niveau de ses extrémités opposées par des plaques d'extrémité (2, 3), équipé d'une chemise chauffante (4), avec des ouvertures d'entrée et de sortie (5, 6) et d'un rotor à lame (7) supporté de façon à pouvoir tourner à l'intérieur de celui-ci,
- charger un courant continu d'un matériau PET fmement divisé, ayant une viscosité intrinsèque comprise entre 0,60 et 0,80 dl/g, dans ledit dispositif de chauffage à turbine (T), dont la température de paroi interne (9) est d'au moins 200°C,
- charger à co-courant dans ledit dispositif de chauffage à turbine (T) un courant continu d'un gaz inerte,
- soumettre ledit courant de matériau PET à l'action mécanique dudit rotor à lame (7) en rotation à une vitesse d'au moins 200 tours par minute, avec une centrifugation résultante du matériau ci-dessus contre ladite paroi chauffée (9), qui entraîne une polymérisation à l'état solide dudit matériau, et le transport de ce dernier vers l'ouverture de sortie,
- décharger en continu un courant de produit PET ayant une viscosité intrinsèque moyenne d'au moins 0,85 dl/g.

2. Procédé selon la revendication 1, dans lequel ledit gaz inerte est l'azote.

3. Procédé selon la revendication 1 ou 2, dans lequel ledit rotor à lame (7) tourne à une vitesse comprise entre 200 et 1 500 tours par minute.

4. Procédé selon l'une quelconque des revendications précédentes, dans lequel le débit du courant de matériau PET entrant dans le dispositif de chauffage à turbine (T) est compris entre 150 et 400 kg/h.

5. Procédé selon la revendication 4, dans lequel le débit du courant de gaz inerte est compris entre 200 et 400 m³/h, mesuré dans des conditions normales de température et de pression.

6. Procédé selon l'une quelconque des revendications précédentes, dans lequel ladite température de paroi est d'environ 240-260 °C.

7. Procédé selon l'une quelconque des revendications précédentes, dans lequel le temps de séjour moyen dudit matériau PET dans le dispositif de chauffage à turbine (T) est compris entre 30 secondes et 2 minutes.

8. Procédé selon l'une quelconque des revendications 1 à 7, dans lequel le matériau PET finement divisé est obtenu par broyage d'un matériau PET provenant de déchets solides recueillis séparément.
